# Europäisches Patentamt

## European Patent Office
## Office européen des brevets

(11) Publication number: **0 071 936**
**B1**

(12) **EUROPEAN PATENT SPECIFICATION**

(45) Date of publication of patent specification: **11.11.87**

(51) Int. Cl.⁴: **G 11 B 15/68, H 04 M 1/65**

(21) Application number: **82106963.0**

(22) Date of filing: **02.08.82**

(54) Telephone interfaced recording and playback apparatus.

(30) Priority: **03.08.81 US 290951**

(43) Date of publication of application:
**16.02.83 Bulletin 83/07**

(45) Publication of the grant of the patent:
**11.11.87 Bulletin 87/46**

(84) Designated Contracting States:
**AT BE CH DE FR GB LI NL SE**

(56) References cited:
**EP-A-0 013 806**
**DE-A-2 009 024**
**DE-A-2 404 879**
**US-A-3 833 186**
**US-A-4 221 938**

(73) Proprietor: **LANIER BUSINESS PRODUCTS, INC.**
**1700 Chantilly Drive, NE**
**Atlanta, Georgia 30324 (US)**

(72) Inventor: **Bolick, Fred C., Jr.**
**1440 Pineway Drive, NE**
**Atlanta Georgia 30 329 (US)**
Inventor: **Plunkett, Luther Carl, Jr.**
**655 Powderhorn Road**
**Atlanta Georgia 30 342 (US)**

(74) Representative: **Patentanwälte Dr. Solf & Zapf**
**Schlossbleiche 20 Postfach 13 01 13**
**D-5600 Wuppertal 1 (DE)**

Courier Press, Leamington Spa, England.

## Description

The present invention relates to an audio signal recording apparatus for recording and reproducing audio signals from one of a plurality of telephone trunks including connecting means for establishing an audio connecting path between a set of record/playback electronics and one of said plurality of trunks in response to an incoming call on one of said plurality of trunks.

In conventional telephone answering apparatus, if it is desired that a multiple number of telephone lines be serviced, a separate record/playback apparatus is required for each line. This is so even if the same prerecorded message is to be played back on each line in response to an incoming call, as in business applications wherein a number of telephone lines service the business. In business applications wherein several telephone lines service a single location but each of a number of different business entities at that location desire playback of a different outgoing message in response to an incoming call to that particular business, a separate record/playback apparatus is also required for each different message.

An object of the present invention is to provide an electronic controller responsive to a particular trunk upon which an incoming call is received to place a particular one of a plurality of recording media in audio communication with the particular trunk.

According to the present invention this is achieved by the features of claim 1. Further improvements of the invention are characterized in the subclaims.

The present invention comprises apparatus in which a single mechanical changer apparatus and one set of record/playback electronics interface a plurality of discrete recording media with a plurality of telephone trunk lines. Preferably, the recording media are conventional tape microcassettes. A controller places a particular one of the recording media in a recording/playback relationship with the apparatus. Selector circuitry in the controller responsive to an incoming call received on a particular one of the telephone lines provides an indexing signal which corresponds to the particular telephone line. Indexing circuitry in the controller then causes the changer apparatus to place a particular one of the recording media into operative relationship with the record/playback electronics. The present invention thereby provides a remotely operable telephone interfaced dictation system or a telephone answering apparatus for a plurality of telephone lines having only one transport and one set of record/playback electronics which serves the function of a plurality of conventional dictation recorders.

The present invention may be used to inexpensively replace a plurality of telephone answering machines for a plurality of distinct telephone trunk lines.

The present invention is arranged to place one of a plurality of recorded messages on the audio connecting path in response to an incoming call on one of a plurality of telephone trunks. The particular message is determined by the particular trunk upon which the incoming call was received. After termination of the particular message, the controller automatically indexes a magazine carrying the plurality of recording media to a particular recording medium dedicated to the recording of messages from the incoming calls. Different messsages on different media may be placed on different trunks, and incoming messages received on the various trunks are then recorded on still another medium.

The present invention may also be arranged so that the controller indexes a particular recording medium associated with a particular trunk in response to a call on that particular trunk. The selected recording medium is then connected to the audio connecting path and the caller may then operate the transport and record/playback electronics as a remotely operated telephone interfaced dictation recorder.

US—A—4 221 938 discloses a central control system for a dictation device with plural dictators and plural recorders. This system includes a circuit for establishing an audio connecting path and a plurality of arguably discrete recording media. However, the circuit includes automatic switching and polling which connects a caller wishing to record dictation with the first available recorder. This is in contrast to the present invention, wherein the invention connects a particular recording medium associated with a particular telephone line to the transport. There is no polling in the present invention. Nor is there any provision for connecting to the first available recorder, since the present invention always selects a particular, associated cassette.

EP—A—0 013 806 describes an automatic cassette changing method and system and cartridge therefore. This method and system is admittedly utilized in connection with the present invention, but this document does not address the concept of association between a line receiving a call and a particular recording medium, either.

DE—A—2 404 879 discloses a dictation arrangement consisting of several recording stations and several dictating stations. One of the dictate stations is automatically connected to the first available message recorder, instead of connecting to a predetermined recorder which is associated with the dictate station. It is admittedly disclosed, that a predetermined recording medium is preferred for each dictating station, but this provision fails to consider the advantages used in the present invention of only a single set of read/write electronics.

One of the principal advantages of the present invention compared with the prior art is that the use of the read/write circuitry and record/playback electronics is reduced to a single set of such electronics, and only the telephone line with the incoming call is connected to the particular associated cassette.

## Brief Description of the Drawings

Fig. 1 is a pictorial view of a cassette changer apparatus utilized in connection with the present invention.

Fig. 2 is a top plan view of a cartridge for use in connection with the apparatus shown in Fig. 1 carrying four tape cassettes.

Fig. 3 is a left side view of the cassette changer apparatus shown in Fig. 1.

Fig. 4 is a right side view of the cassette changer apparatus shown in Fig. 1, showing a cassette cartridge of the type shown in Fig. 2, mounted on the apparatus in a raised position.

Fig. 5 is an end cross sectional view of the cassette changer apparatus taken along line 5—5 of Fig. 3.

Fig. 6 is a top view of the cassette changer apparatus shown in Fig. 1.

Fig. 7 is a vertical cross sectional view of the cassette changer apparatus shown in Fig. 1, taken along line 7—7 of Fig. 6.

Fig. 8 is a pictorial view of the cam of the cassette changer apparatus.

Fig. 9 is a top view of the cartridge shown in Fig. 2, with the top plate of the cartridge removed.

Fig. 10 is a schematic diagram of a controller for a telephone interfaced remote control dictation recorder embodiment of the present invention.

Fig. 11 is a schematic diagram of a controller for a multiple message telephone answering embodiment of the present invention.

Fig. 12 is a schematic diagram of an embodiment of the line seizure control apparatus of Figs. 10 and 11.

## Detailed Description

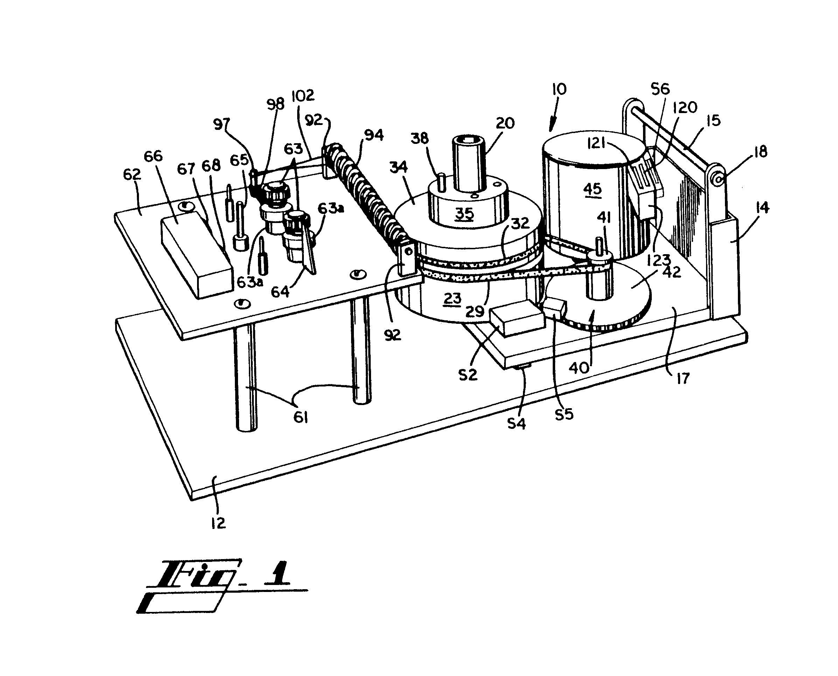

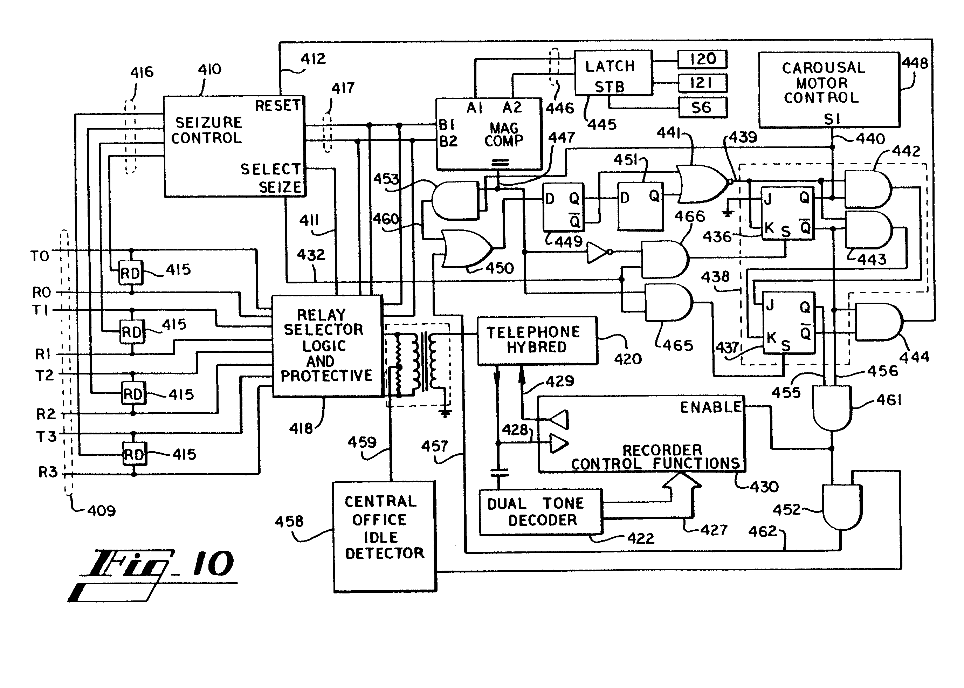

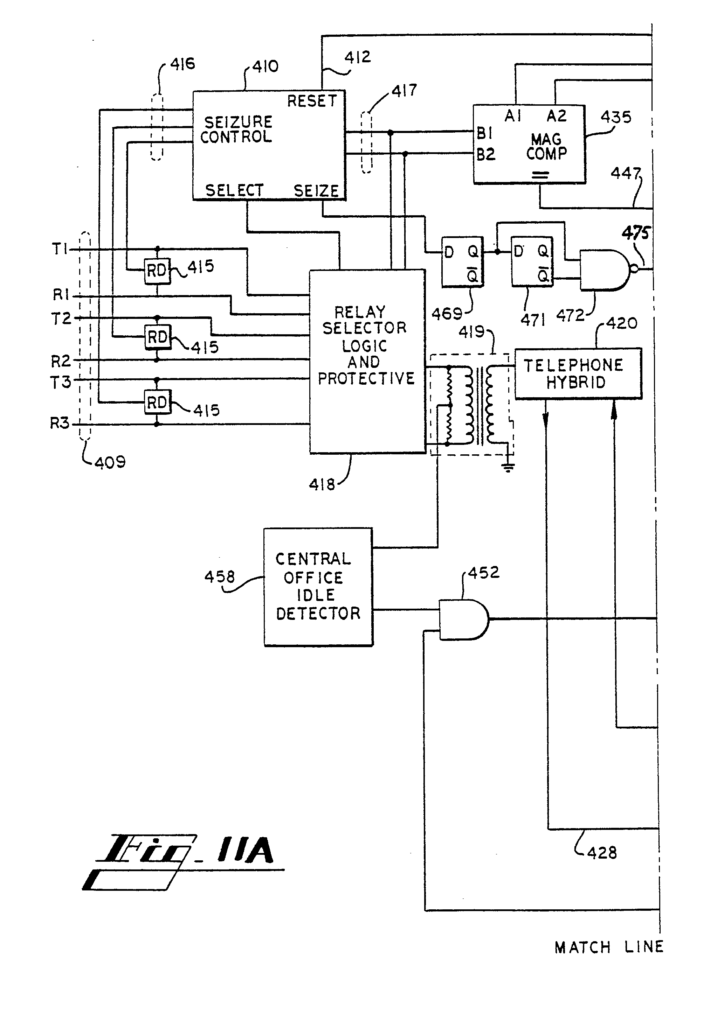

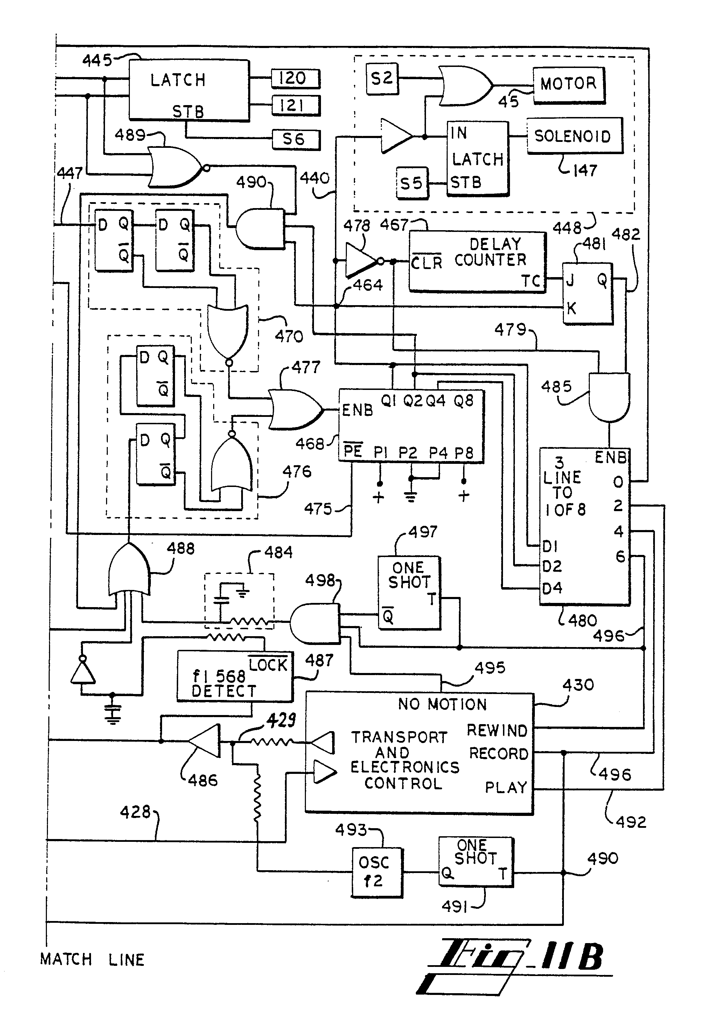

Fig. 1 shows the cassette changer apparatus 10 which, in conjunction with the control circuitry described hereinbelow, embodies the present invention. The changer apparatus 10 includes a rectangular base 12, across which is mounted a pivot rod support member 14 carrying a pivot rod 15. A movable L-shaped frame 17 is pivotally attached to the pivot rod 15 by pivot bearings 18. Near the end of the horizontal portion of the frame 17, vertical shaft 20 is fixed to the frame 17 by a shaft nut 21, as shown in Fig. 7.

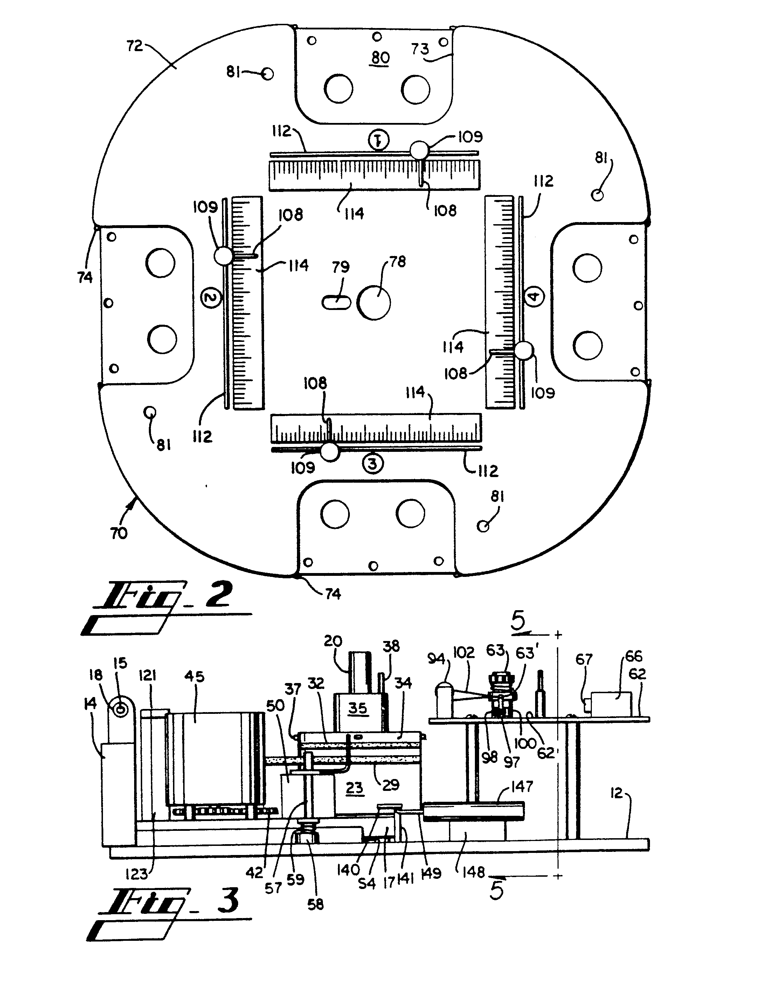

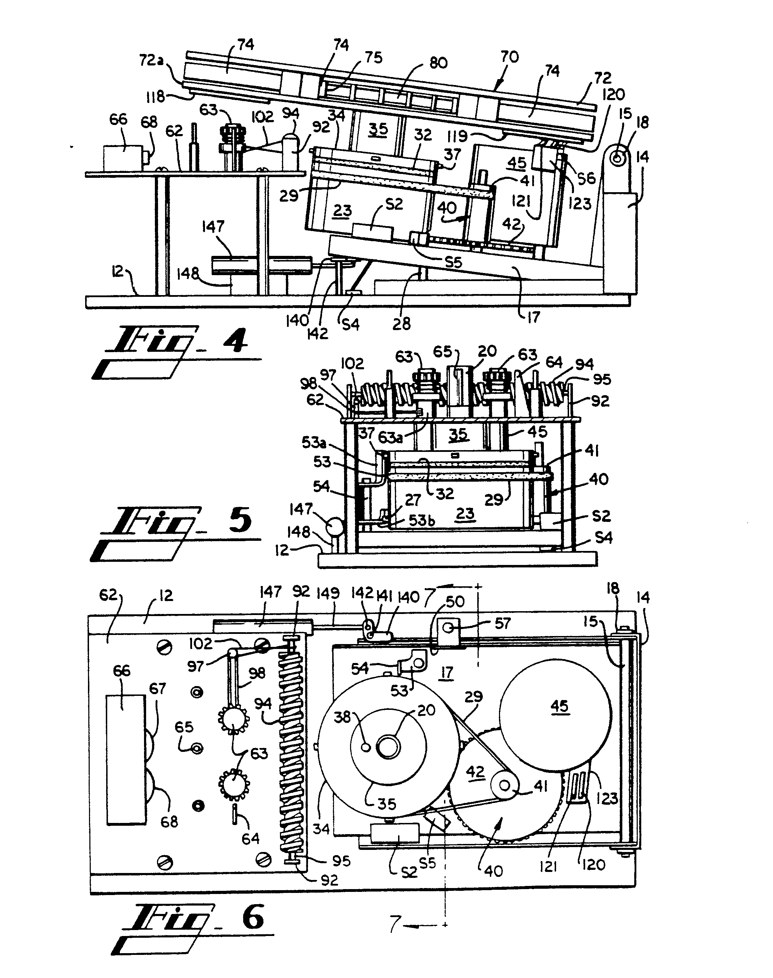

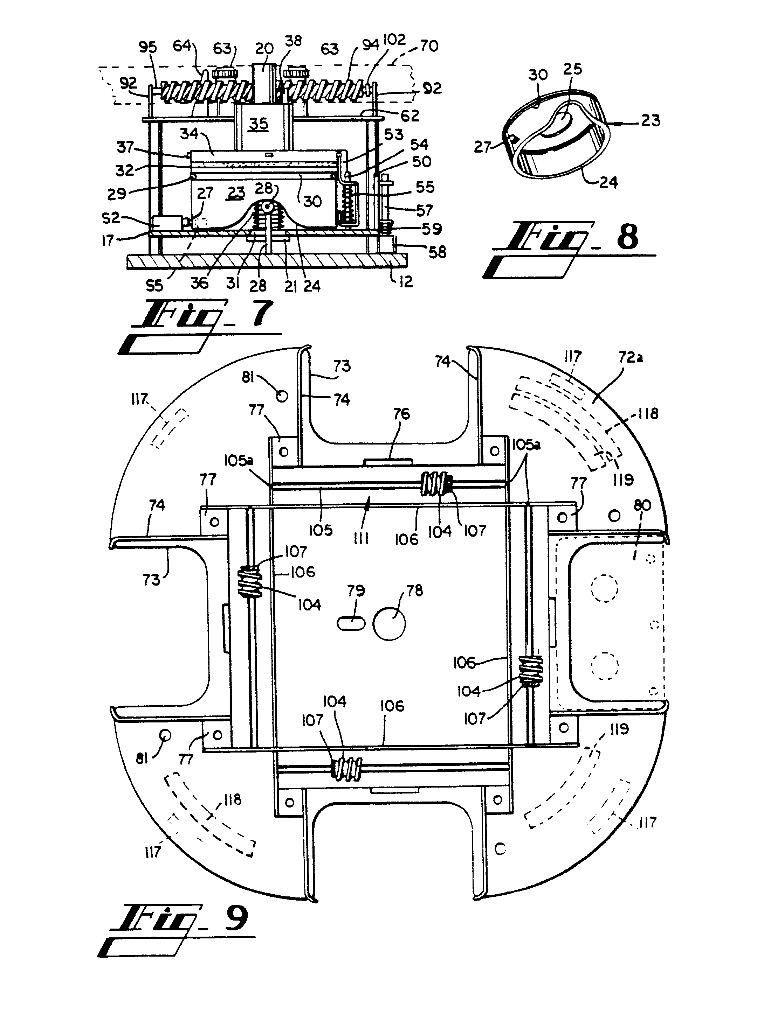

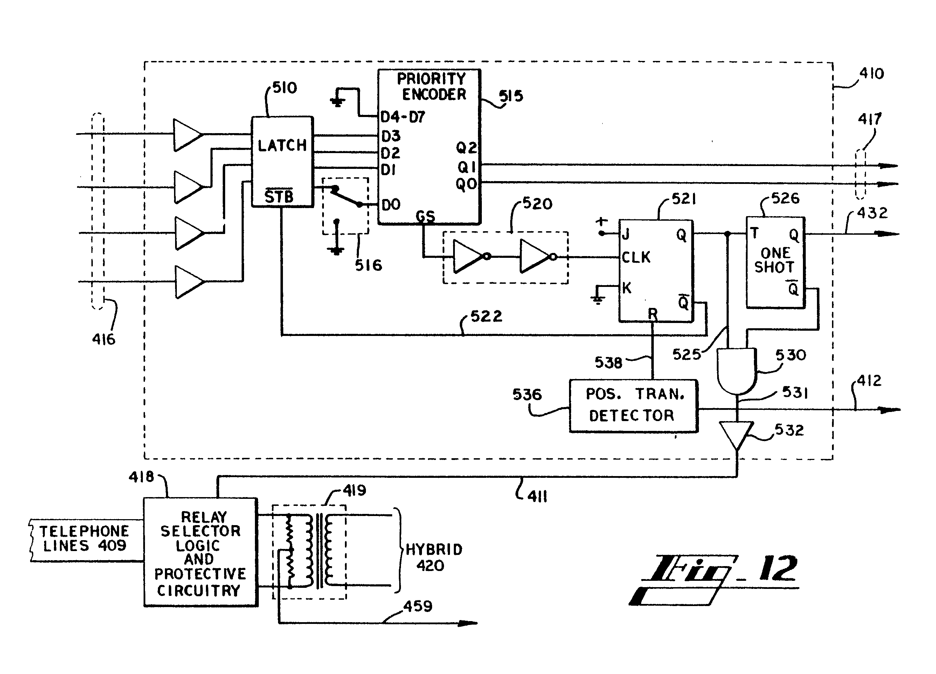

A cylindrical cam 23, shown in Figs. 1, 3—5, 7 and 8, is rotatably mounted on the vertical shaft 20. The shaft 20 passes through an opening 25 in the upper end of the cam 23, and a cam surface 24 is defined by the edge of the cylinder, seen in Fig. 8. A cam follower 28 is mounted on the base 12 and extends through an opening 31 in the movable frame 17 to engage the cam surface 24, as shown in Fig. 7. As the cam rotates, the cam 23 and cam follower 28 cooperate to lift the frame 17 from a lowered position (shown in Figs. 3 and 7) to a raised position (shown in Fig. 4).

A cam limit switch S2 mounted adjacent to the cam is engaged by a cam trip 27 when the cam 23 (and therefore the frame 17) is in a fully lowered position. Another switch S5 is momentarily closed by trip 27 once during early rotation of the cam. Cam belt groove 30 about the circumference of the cam receives a cam belt 29 to drive the cam 23 in a clockwise direction. A limit switch S4 mounted on the base 12 is closed when the frame 17 is lowered.

Immediately above the cam 23 are a clutch 32, a clutch-engaging member 34, and a cartridge support member 35. The clutch-engaging member 34 and cartridge support member 35 are together rotatably mounted on the shaft 20. A clutch biasing spring 36 biases the cam 23 against the clutch-engaging member 34. When the cam 23 is rotated about the shaft 20, the cartridge support member 35 rotates with the cam. A cartridge locator key 38 positions a cartridge 70 placed on the cartridge support member 35 by extending into an opening 79 in the cartridge. The cartridge 70, as shown in Figs. 2, 4 and 9, includes a plurality of tape cassette locations. The clutch-engaging member 34 includes four cartridge motion stops 37.

A cam drive pulley 40 is rotatably mounted on the frame 17 next to the cam 23. A small diameter upper member 41 of the pulley 40 carries the cam belt 29. A larger diameter lower member 42 of the pulley 40 forms a gear which is driven by a drive gear (not shown) at the base of a DC motor 45.

A pivot link 53 is pivotally mounted adjacent to the cam 23 on a vertical axle 54 extending upwardly from the frame 17. A brake member 53a of pivot link 53 lies in the path of the cartridge motion stops 37, and a trigger member 53b lies in the path of the cam trip 27, as best shown in Figs. 6 and 7. When the cam 23 rotates, the cam trip 27 engages the trigger member 53b, rotating the pivot link 53 against the bias of a spring 55, and removes a brake member 53a from the path of the cartridge motion stops 37. The brake member 53a is urged back into place by the spring 55, so that when the next stop 37 arrives at the position of the pivot link 53, the motion of the clutch-engaging member 34 will be arrested.

In order to ease the descent of the frame 17 from a raised to a lowered position as the cam 23 rotates, a dash pot 57 having a foot 58 biased by a spring 59 eases the frame 17 into a lowered position.

An "L" shaped pivoted latch 140 can be pivoted under the frame 17 by a solenoid 147 when the frame 17 is in a fully raised position. When power is applied to the solenoid 147 by a control circuit to be described hereinafter, a piston rod 149 extends out of the solenoid 147, causing the arm of the "L" shaped latch 140 to be pivoted under the frame 17. Operation of the solenoid 147 and latch 140 allow the operation to change from one cassette location directly to another cassette location not immediately adjacent to the original location, in a manner to a described hereinafter.

Mounted to the base 12 beyond the end of the horizontal portion of the frame 17 is a conventional tape transport deck 62 supported on legs 61. The mechanism includes spindles 63 enclosed in housings 63a, and a capstan 65. A tapered locator key 64 engages a cartridge 70 and guides it into proper position with respect to the transport mechanism. A movable transducer head assembly 66 includes a pinch roller 67 for engaging the capstan and a record/listen head 68 moves into and out of engagement with a tape cassette in a conventional manner.

A worm gear 94, axle 95, and axle supports 92 are used in conjunction with the mechanical tape displays described in US—A—4,319,290.

The cassette-carrying cartridge 70 shown in Figs. 2 and 9 includes upper and lower parallel plates 72 and 72a, each including cutouts 73. Flexible guides 74 are attached to blocks 77 which attach the parallel plates 72 and 72a to one another and support the guides 74. A rear stop 76 is located inwardly of each cutout 73. Projections 75 on the guides 74 removably retain a standard microcassette 80 within the cartridge 70 at a fixed cassette location. The cutouts 73 are somewhat smaller in area than the cassettes, so that the parallel plates 72 and 72a restrain the cassettes. The openings in the cassettes are exposed for insertion of the rotatable spindles 63 and capstan 65 of the transport mechanism.

A shaft opening 78 at the center allows the cartridge 70 to be placed over the vertical shaft 20 and to rest upon the cartridge support members 35, as shown in Fig. 4. Keyway 79 receives the cartridge locator key 38. A positive locator keyway 81 located adjacent each cassette position in the cartridge 70 receives the locator key 64 mounted on the transport deck 62 when the cartridge 70 is lowered onto the tape transport deck 62 and guides the cartridge 70 into precise alignment.

The mechanical apparatus described above provides the ability to selectively engage, one at a time, a plurality of recording media located in the four cassette positions 73 on cartridge 70 with the transport and record playback head apparatus located on deck 62. This mechanical apparatus together with the control circuitry described hereinbelow, comprise a recording medium control means for alternately placing each of a plurality of recording media in recording relationship with transducer 67. The control circuitry cooperates with the mechanical elements shown in Figs. 1—9 to provide new and unique telephone answering apparatus and telephone interfaced remote control dictation recorder.

Remote Control Dictation Embodiment

Turning to Fig. 10, control circuitry for a telephone interfaced remote control dictation is shown. A plurality of telephone trunk lines 409 provide input. Each trunk or trunk lines 409 comprises a tip and ring pair. In Fig. 10 four such tip ring pairs are shown (T0, R0) through (T3, R3).

Each tip ring pair has a conventional ring detector 415 disposed across the pair which provides a positive voltage on one of lines 416 in response to detecting a ringing signal on the trunk.

Trunks 409 are provided as inputs to selector circuitry block 418, which comprises conventional relay switching circuitry for connecting one of trunks 409 to transformer 419 and circuitry necessary to comply with Part 68 of the regulations of the Federal Communications Commission, U.S.A. The output of relay selector 418 appears on the primary of transformer 419 which couples the AC component of the telephone signal to telephone hybrid 20.

A logical one on line 411 causes selector 418 to connect one of trunks 409 to the primary of transformer 419. Trunk seizure control circuitry 410 provides a two bit binary number on lines 417 which corresponds to the particular one of trunks 409 which will seize the machine. Telephone hybrid 420 is coupled to a dual tone decoder 422 which provides a decoded output from conventional dual tone telephone signals to control recorder control functions shown in block 430. Lines 427 control conventional recorder functions such as record, playback, fast forward and others. The signal of hybrid 420 is also provided along line 428 as the audio input to the conventional control and record/playback electronics shown as block 430. The output of the playback amplifier of the recorder is shown as line 429.

When an incoming call is received, trunk seizure control 410 provides a two bit number on line 417 which indicates the particular trunk which is being answered and provides a pulse on line 432 upon seizure of that trunk. The pulse on line 432 is provided through one of AND gates 465 and 466 to the direct set input of either flip-flop 436 or 437.

Flip-flop 436 will set whenever an operating sequence begins and a recording medium which does not correspond to the calling trunk is at deck 62. If the recording medium corresponding to the calling trunk is at deck 62, flip-flop 437 will set.

All synchronous counters and flip-flops, the clock inputs of which are not shown in Figs. 10 and 11, are to be connected to a common high speed clock (not shown) in a conventional manner.

Flip-flops 436, 437 and gates 442 and 443 comprise a two bit counter 438. A logical one at point 439 from NOR gate 441 enables counter 438. The 00 state of counter 438 is stable and the counter will not exit this state unless a positive transition from the seize output of trunk seizure control 410 has been provided.

Each state of lines 417 from seizure control 410 corresponds to one cassette position 73 of cartridge 70.

Switches 120 and 121 (Fig. 1) in conjunction with cams 118 and 119 (Fig. 9) detect which of the microcassette positions is engaged with the transport. As cartridge 70 is rotated, cams 118 and 119 close a combination of switches 120 and 121 which provide a direct binary readout corresponding to the cassette position approaching the transport. As may be seen from Fig. 9, a third cam 117 is provided which strobes a third switch S6 (Fig. 1) which is mounted parallel to switches 120 and 121. Switch S6 provides a pulse during each quarter rotation of cartridge 70. This pulse is provided to the strobe input (STB) of latch 445 and latches the states of switches 120 and 121 onto lines 446.

As may be seen from Fig. 10, lines 446 comprise one set of inputs to a magnitude comparator 435, the other set of inputs being provided on lines 417 corresponding to the particular trunk which has been seized. A logical one is provided from the equal (=) output of magnitude comparator 435 on line 447 whenever the cassette position corresponding to the particular seized trunk is either engaged with the transport or is approaching the transport during a change operation.

The setting of flip-flop 436 upon seizure causes a logical one to appear on line 440, which is provided to an input labelled S1 of carousel motor control block 448. On Fig. 11 the internal components of block 448 are shown. So long as a logical one is present on line 440 the cartridge 70 will continue to rotate; removal of the logical one on line 440 will cause the next microcassette approaching the transport to be lowered into operative engagement therewith.

The apperance of a logical one on line 447 during rotation of cartridge 70 causes an output on OR gate 450. This causes a pulse one clock period wide to be produced by flip-flops 449, 451 and appear on point 439. Counter 438 then enters its 10 state which enables the conventional recorder control functions and playback and record electronics. Central office idle detector 458 detects termination of trunk seizure by the telephone company central office and causes a logical one to appear on line 457.

Dual tone decoder 422 decodes pairs of tones corresponding to depression of particular keys on a standard dual tone telephone, or may be embodied as a dial pulse counter for control of the recorder from rotary dial telephones. Conventional telephone hybrid 420 establishes an audio communication path along lines 428 and 429 to and from the audio input and output of the record/playback electronics in block 430.

When the dictator terminates seizure of the trunk by placing his telephone on hook, an output appears on OR gate 450. Counter 438 counts back to its stable 00 state. AND gate 444 then provides a logical one on line 412 to the reset input of trunk seizure control 410, which is thus placed in condition to accept another incoming call.

Telephone Answering Embodiment

The controller for a second embodiment of the present invention is shown in Fig. 11. In Fig. 11 the same devices which appear in Fig. 10 are referenced with the same numerals. The controller of Fig. 11 has only three trunks because three separate passages are provided on three of the microcassettes contained in cartridge 70 while the fourth cassette is used for recording of messages.

The seizure of one of trunks 409, the detection of the particular trunk seized, and the audio connections through telephone hybrid 420 are the same as described above for the controller of Fig. 10.

The user of the apparatus records three distinct messages on each of three different microcassettes on cartridge 70. Each distinct message is appropriate for answering one of the three trunks 409. When a call is received on a particular one of trunks 409, the appropriate message cassette is placed in operative relationship with the transport and delivers the prerecorded message to the calling party. Upon termination of the prerecorded message, the controller indexes cartridge 70 to place the cassette dedicated to recording the incoming messages in operative relationship with the transport. Upon loss of central office seizure of the trunk, the controller indexes back to the prerecorded message which has just been delivered, rewinds the microcassette, and waits for the next call.

Block 448 controlling motor 34 of the mechanical apparatus is shown in detail in Fig. 11. Activation of solenoid 147 causes cartridge 70 to rotate past an approaching cassette. The next output from switch S5 deactivates solenoid 147 and causes the cartridge to be lowered and motor 45 to shut off when cam 27 (Fig. 8) engages the actuator for switch S2.

Operation begins when trunk seizure detector 410 evidences seizure of one of trunks 409 by providing an output on point 411 to D-type flip-flops 469 and 471, which cause a pulse one clock period wide on line 475. This pulse is provided to the negated parallel enable (PE) input of state counter 468 which causes the counter to load 1001.

The Q1—Q4 bits of counter 468 are provided as the inputs to decoder 480. The least significant state bit (Q1) is provided to the K input of flip-flop 481 and is inverted by inverter 478, the output of which is provided along line 479 to AND gate 485 and to the negated clear (CLR) input of delay counter 467. The Q1 state bit is also provided to line 440 and controls motor 45 which is active to rotate cartridge 70 during odd numbered states of counter 468 only.

Only even numbered outputs of decoder 480 are provided as inputs to the transport and electronics control block 430, which is operative during even numbered states of counter 468 and inoperative during odd numbered states during which cartridge 70 is being rotated.

During the 001 state the apparatus removes the zero position cassette from the transport and begins rotation of cartridge 70 until switches 120 and 121 detect the approach of the cassette position corresponding to the particular one of trunks 409 which has been seized.

Positive transition detector 470 provides a positive going pulse one clock period wide to OR gate 477 upon the approach of the proper cassette. Switch S2 opens when the approaching microcassette is lowered into engagement with the transport. Counter 468 enters an even state, which allows delay counter 467 to count. When delay counter 467 has counted to its terminal count, flip-flop 481 will set and enable decoder 480.

Delay counter 467 provides sufficient time to allow cartridge 70 to rotate from the actuation of switch S6 until the cassette is properly lowered into the transport. The appropriate recorded message on the cassette engaged with the transport is then played over line 429, amplified by summing amplifier 486, and provided to telephone hybrid 420.

In the second preferred embodiment of the present invention a tone of predetermined frequency f1 is recorded at the end of each outgoing message. Prior to provision of the f1 tone each message should terminate by an audible instruction to the caller to leave a message upon the occurrence of an audible tone. It is therefore preferred that the tone of frequency of f1 be audible to the calling party.

The presence of the f1 tone on line 429 is detected by f1 tone detector 487 which in the second preferred embodiment is a type 567 phase lock loop tone decoder having an output which goes low upon the detection of a tone which falls within the predetermined lock range of the detector. This output is damped by an RC network designed to damp out spurious locks. When a true lock condition is detected the output is inverted and provided as an input to OR gate 488 at the input of transition detector 476 which provides a pulse to OR gate 477 enabling state counter 468 to count to its next state.

Therefore the f1 tone at the end of the recorded outgoing message causes state counter 468 to count to its three state (011). Since this is an odd numbered state, motor 45 again comes operative and the message cassette leaves the transport. NOR gate 489 detects the approach of the zero cassette position, which holds the microcassette for recording incoming messages. This cassette is placed into engagement with the transport.

After the delay from delay counter 467, a logical one appears on line 496 which activates the record function of transport and electronics control block 430 and triggers one shot 491. One shot 491 turns on an oscillator 493 which provides an audible tone of predetermined frequency which signals the calling party that the recorder is ready to accept and record an incoming message.

The apparatus remains in its four (100) state until the calling party hangs up. The idle condition of the trunk is detected by idle detector 458 and AND gate 452, causing counter 468 to count to its five (101) state. During the five state of the counter, motor 45 rotates cartridge 70 until the message cassette corresponding to the trunk upon which the call was received is again encountered. The outgoing message cassette will then be lowered into operative connections with the transport.

The six (110) state of counter 468 activates the rewind function on transport and electronics control block 430 and also triggers one shot 497. The output of one shot 497 is provided to AND gate 498. The output of AND gate 498 is damped by RC network 484. The remaining input to AND gate 498 is an absence of motion detection signal which appears on line 495 from the transport and electronics control block 430. The period of one shot 497 allows mechanical inertia of the transport spindle motor (not shown) to be overcome during the rewind operation. When the tape is completely rewound, an output appears on line 495 and AND gate 498 causes a zero to one transition at the output of OR gate 488. OR gate 488 allows state counter 468 to count to its seven count (111).

The seven state, being an odd numbered state, causes motor 45 to become operational to index the zero position (incoming message recording) cassette and cause a transition to appear at the output of AND gate 490. This transition causes the counter to count over to its 00 state. After the delay from delay counter 467, the zero output of decoder 480 is provided to line 412, resetting trunk seizure detector 410.

At the end of a sequence of operation, the apparatus of the second preferred embodiment leaves the zero cassette engaged with the transport.

An embodiment of seizure control apparatus 410 is shown in Fig. 12. The outputs of ring detectors 415 are provided on lines 416 as the inputs to a latch 510. The outputs of latch 510 are provided as the four lowest order inputs to a priority encoder 515, a type CD-4532B CMOS eight bit priority encoder currently manufactured by RCA, which provides a two bit encoded output on lines 417 corresponding to the highest order one of inputs D0—D3 (D3 being highest priority) having a one thereon. This arrangement allows telephone lines 409 to be prioritized in the event of simultaneous ringing. Switch 516 allows selective connection of the D0 input of encoder 515 to either the lowest priority trunk for the embodiment of Fig. 10 or to ground for the embodiment of Fig. 11.

The GS output of encoder 515 on line 518 goes high in the event that one of the inputs goes high. The output on line 518 is delayed by delay element 520, which then sets flip-flop 521 and causes a pulse to appear on line 522 strobing latch 510. Flip-flop 521 also triggers one shot 526, whose output appears at the seize output 432 of seizure control apparatus 410 as shown in Figs. 10 and 11.

When one shot 526 times out, both inputs to AND gate 530 become high, causing a signal to appear on line 411 and activate relay selector circuitry 418.

A logical one on line 412 resets seizure control apparatus 410. Line 412 is connected to positive transition detector 536 which provides a pulse one clock period wide on line 538 resetting flip-flop 521. Transition detector 536 may be identical to detectors 470 and 476 shown on Fig. 11.

**Claims**

1. Audio signal recording apparatus for recording and reproducing audio signals from one of a plurality of telephone trunks (409) including connecting means for establishing an audio connecting path between a set of record/ playback electronics (430) and one of said plurality of trunks in response to an incoming call on one of said plurality of trunks, characterized by:

a record medium transport (62, 70) connected to said record/playback electronics;

a changer (70) for selectively moving any one of a plurality of discrete recording media (80) onto said record medium transport;

a control circuit (410) responsive to said incoming call and said plurality of trunks for providing a particular one of a plurality of indexing signals (417) corresponding to the particular one of said plurality of trunks receiving said incoming call; and

indexing means connected to said changer (438, 435, 448, 468, 480, 470, 476, 445) for causing said changer to place a particular one of said plurality of recording media associated with the particular one of said plurality of trunks receiving the incoming call onto said transport in response to said particular one of said plurality of indexing signals.

2. Audio signal recording apparatus according to Claim 1, characterized in that at least one of said plurality of discrete recording media (80) are uniquely associated with a particular one of said plurality of trunks (409).

3. Audio signal recording apparatus according to Claim 1 or 2, characterized in that said changer (70) provides a media identifier signal (446) corresponding to the particular one of said plurality of discrete recording media (80) moved onto said transport (62, 70).

4. Audio signal recording apparatus according to one or more of Claims 1 to 3, characterized in that said indexing means and said control circuit comprises:

a trunk identifier circuit (410) for identifying an incoming call received on one of said plurality of trunks and for providing a trunk identifier signal (417) corresponding to the particular trunk receiving said incoming call;

a control circuit (410) responsive to an incoming call received on one of said plurality of trunks for providing an indexing signal (432) indicative of an incoming call being received on one of said plurality of trunks;

a circuit (438, 448) responsive to said indexing signal for causing said changer to selectively move said plurality of recording media; and

a media selection circuit (435) responsive to said trunk identifier signal and said media identifier signal for halting the movement of said changer when the particular one of said plurality of recording media associated with the trunk receiving the incoming call is moved onto said transport.

**Patentansprüche**

1. Tonaufzeichnungsgerät zur Aufzeichnung und Wiedergabe von Tonsignalen von einer von mehreren Fernsprechleitungen (409) mit einer Verbindungseinrichtung zur Errichtung eines Tonverbindungswegs zwischen einem Satz von Aufzeichnungs/Wiedergabeelektronikeinrichtungen (430) und der einen Fernsprechleitung in Abhängigkeit eines auf der Fernsprechleitung ankommenden Anrufs, gekennzeichnet durch

einen mit der Aufzeichnungs/Wiedergabeelektronikeinrichtung verbundenen Aufzeichnungsträgertransport (62, 70);

eine Wechsleranordnung (70) zum wahlweisen Bewegen irgendeines von mehreren getrennten Aufzeichnungsträgern (80) auf den Aufzeichnungsträgertransport;

einen Steuerschaltkreis (410), der auf den ankommenden Anruf und die Vielzahl der Fernsprechleitungen anspricht zur Erzeugung eines besonderen Indexsignals aus einer Vielzahl von Indexsignalen (417), das der den ankommenden Anruf empfangenden Fernsprechleitung entspricht; und

eine mit der Wechsleranordnung verbundene Indexeinrichtung (438, 435, 448, 468, 480, 470, 476, 445), die bewirkt, daß die Wechsleranordnung ansprechend auf das besondere Indexsignal einen bestimmten, einer bestimmten Fernsprechleitung zugeordneten Aufzeichnungsträger von der Vielzahl der Aufzeichnungsträger an der den ankommenden Anruf empfangenden Fernsprechleitung anordnet.

2. Tonaufzeichnungsgerät nach Anspruch 1, dadurch gekennzeichnet, daß mindestens einer der Vielzahl der getrennten Aufzeichnungsträger (80) einer einzigen der Vielzahl der Fernsprechleitungen (409) zugeordnet ist.

3. Tonaufzeichnungsgerät nach Anspruch 1 oder 2, dadurch gekennzeichnet, daß die Wechsleranordnung (70) ein Aufzeichnungsträgerkennzeichnungssignal (446) liefert, das einem besonderen der Vielzahl der getrennten Aufzeichnungsträger (80) entspricht, der auf dem Transport (62, 70) bewegt wird.

4. Tonaufzeichnungsgerät nach einem der Ansprüche 1 bis 3, dadurch gekennzeichnet, daß die Indexeinrichtung und der Steuerschaltkreis einen Fernsprechleitungskennzeichnungsschaltkreis (410) zur Kennzeichnung eines auf einer der Vielzahl der Fernsprechleitungen ankommenden Anrufs und zur Schaffung eines der den Anruf empfangenden besonderen Leitung entsprechenden Fernsprechleitungskennzeichnungssignals (417), einen auf den auf der besonderen Fernsprechleitung der Vielzahl der Fernsprechleitungen ankommenden Anrufe ansprechenden Steuerschaltkreis zur Schaffung eines Indexsignals (432) zur Anzeige eines Empfangs eines ankommenden Anrufs auf der besonderen Fernsprechleitung der Vielzahl der Fernsprechleitungen, einen auf das Indexsignal ansprechenden Schaltkreis (438, 448) zur Bewirkung eines wahlweisen Bewegens der Vielzahl der Aufzeichnungsträger durch die Wechsleranordnung, und einen auf das Fernsprechleitungskennzeichnungssignal und das Aufzeichnungsträgerkennzeichnungssignal ansprechenden Aufzeichnungsträgerwählschaltkreis (435) zum Anhalten der Bewegung der Wechsleranordnung, wenn der besondere Aufzeichnungsträger der Vielzahl der Aufzeichnungsträger, der der den ankommenden Anruf empfangenden Fernsprechleitung zugeordnet ist, auf dem Transport bewegt worden ist, umfaßt.

## Revendications

1. Appareil d'enregistrement de signaux audio destiné à enregistrer et reproduire des signaux audio à partir de l'une parmi plusieurs lignes téléphoniques urbaines (409) comprenant des moyens de connexion pour établir un trajet de connexion audio entre un module électronique d'enregistrement/reproduction (430) et une des diverses lignes urbaines en réaction à une communication d'entrée sur l'une de ces lignes, caractérisé par:
   un mécanisme d'entraînement de support d'enregistrement (62, 70) connecté au module électronique d'enregistrement/reproduction,
   un changeur (70) pour amener sélectivement l'un quelconque de divers supports d'enregistrement discrets (80) sur le mécanisme d'entraînement de support d'enregistrement,
   un circuit de commande (410) réagissant à la communication d'entrée et aux diverses lignes urbaines pour fournir un signal particulier parmi plusieurs signaux d'indexage (417) correspondant à la ligne particulière parmi les diverses lignes urbaines recevant la communication d'entrée, et
   un dispositif d'indexage connecté au changeur (438, 435, 448, 468, 480, 470, 476, 445) pour amener ce changeur à placer un support d'enregistrement particulier parmi les divers supports d'enregistrement associés à la ligne particulière parmi les diverses lignes urbaines recevant la communication d'entrée sur le mécanisme de transport, en réaction au signal particulier parmi les divers signaux d'indexage.

2. Appareil d'enregistrement de signaux audio suivant la revendication 1, caractérisé en ce qu'au moins un des divers supports d'enregistrement discrets (80) est associé de manière unique à une ligne particulière parmi les diverses lignes urbaines (409).

3. Appareil d'enregistrement de signaux audio suivant la revendication 1 ou 2, caractérisé en ce que le changeur (70) produit un signal identificateur de support d'enregistrement (446) correspondant au support particulier parmi les divers supports d'enregistrement discrets (80) amenés sur le mécanisme d'entraînement (62, 70).

4. Appareil d'enregistrement de signaux audio suivant l'une quelconque des revendications 1 à 3, caractérisé en ce que le dispositif d'indexage et le circuit de commande comprennent un circuit identificateur de ligne urbaine (410) pour identifier une communication l'entrée reçue sur une des diverses lignes urbaines et pour fournir un signal identificateur de ligne urbaine (417) correspondant à la ligne urbaine particulière recevant la communication d'entrée,
   un circuit de commande (410) réagissant à une communication d'entrée reçue sur une des diverses lignes urbaines afin de fournir un signal d'indexage (432) indicatif de la réception d'une communication d'entrée sur une des diverses lignes urbaines,
   un circuit (438, 448) réagissant au signal d'indexage pour amener le changeur à déplacer sélectivement les divers supports d'enregistrement, et
   un circuit de sélection de support d'enregistrement (435) réagissant au signal identificateur de ligne urbaine et au signal identificateur de support d'enregistrement pour arrêter le déplacement du changeur lorsque le support d'enregistrement particulier parmi les divers supports d'enregistrement associés à la ligne urbaine recevant la communication d'entrée est amené sur le mécanisme d'entraînement.

Fig. 1

*Fig_2*

*Fig_3*

**Fig. 4**

**Fig. 5**

**Fig. 6**

Fig. 7

Fig. 8

Fig. 9

4

Fig. 10

Fig. 11A

MATCH LINE

Fig. 11B

MATCH LINE

Fig. 12

8